Europäisches Patentamt

(19) European Patent Office

Office européen des brevets

(11) Publication number: **0 013 645**
**A1**

(12) **EUROPEAN PATENT APPLICATION**

(21) Application number: **80400018.0**

(22) Date of filing: **08.01.80**

(51) Int. Cl.³: **B 23 B 31/20**

(30) Priority: **09.01.79 US 2116**

(43) Date of publication of application:
**23.07.80 Bulletin 80/15**

(84) Designated Contracting States:
**DE FR GB**

(71) Applicant: **THE BENDIX CORPORATION**
**Executive Offices Bendix Center**
**Southfield, Michigan 48037(US)**

(72) Inventor: **Better, Bernard Raymond**
**3119 South Lowe Avenue**
**Chicago, Illinois 60616(US)**

(72) Inventor: **Lehde Jr., John William**
**1144 North Mason Avenue**
**Chicago, Illinois 60651(US)**

(74) Representative: **Brullé, Jean et al,**
**Service Brevets Bendix 44, rue François 1er**
**F-75008 Paris(FR)**

(54) **Collet for a collet chuck assembly.**

(57) The present invention relates to a collet (100) which has a body (200) with a tool-receiving bore (300) extending axially from front to rear. A plurality of slots (410, 510) are arranged to provide the desired features in the collet (100). The slots (410, 510) are arranged in two sets, one set (510) extending rearwardly from the forward end, the other set (410) extending forwardly from the rear end. In each set, the slots are uniformly spaced between adjacent slots and in each set the slots are radial and preferably an even number of slots in each set allows for them to be located at diametrically-opposed locations on the collet (100). The one set (510) of slots is located a few degrees radially offset from the other set (410) and the combined length ($L_1$, $L_2$) of one slot from each set (410, 510) is greater than the length of the collet (100) axially. The length and radial location of the slots (410,510) provides a flex beam between the closely-spaced slots (410,510) from the first and second sets, which flex beam has a cross section which is substantially wedged-shaped.

FIG. I

## COLLET FOR A COLLET CHUCK ASSEMBLY

The present invention relates to a collet for a collet-chuck assembly.

A collet provides a centering function while allowing for necessary clearance of the tool during insertion and while eliminating clearance between collet and tool during machining.

Ideally, such collets would have strength and rigidity, low manufacturing costs, uniform closing of the front and back of the collet on the tool and present an easy method of making design changes to accomodate different sizes and configurations of collets. Further, a collet should have uniform flexibility and tend to close in response to inward forces on diametrically-opposed sides.

In one design of the prior art, the flexibility fo a collet is obtained by employing a large number of slots extending rearwardly from the forward end and extending radially from the wall to the internal bore, said slots being arranged in diametrically opposed pairs. These are undesirable in that they have greater stiffness (less flexibility) than is desired.

Collets having similar characteristics and limitations to those described above are referenced in U.S. Patents 2,346,706 ; 2,500,491; 2,562,455 ; 2,996,301 and 3,311,383. Other patents which disclose somewhat related collet designs are U.S.Patents 2,228,685 and 2,465,837.

It is thus apparent that there are disadvantages and limitations of the prior art collets.

The object of the present invention is to provide a collet which overcomes the disadvantages and limitations of the prior art collets.

The present invention is a collet which includes a second set of slots extending forwardly from the rear end, said slots extending radially from the wall to the internal bore and being spaced from the nearest adjacent slot in the first set by a small angular displacement.

In each set, the slots are uniformly spaced between adjacent slots and in each set the slots are radial and preferably an even number of slots in each set allows for them to be located at diametrically-opposed locations on the collet. The one set of slots is located a few degrees radially offset from the other set and the combined length of one slot from each set is greater than the length of the collet axially. The length and radial location of the slots provides a flex beam between the closely-spaced slots from the first and second sets, which flex beam has a cross section which is substantially wedged-shaped. It appears that this wedged-shaped flex beam and the radial orientation of the slots provides the advantageous features of the present invention.

The diametrically-opposed slots create manufacturing savings by allowing them to be made simultaneously.

The present collet has strength and rigidity, a rather low manufacturing cost, uniform closing and rather easy to make design changes. It is not particularly dependent upon or limited to those collets which have a particular wall thinness or thickness. The collet of the present invention tend to close in response to diametrically-opposed forces on its outer surfaces.

The invention will now be described by way of example with reference to the accompanying drawings in which :

Figure 1 is a side view of a collet of the present invention.

Figure 2 is an end view of the collet of Figure 1, looking from the line II-II in the direction of the arrows.

Figure 3 is an end view of the collet of Figure 1, looking from the line III-III in the direction of the arrows.

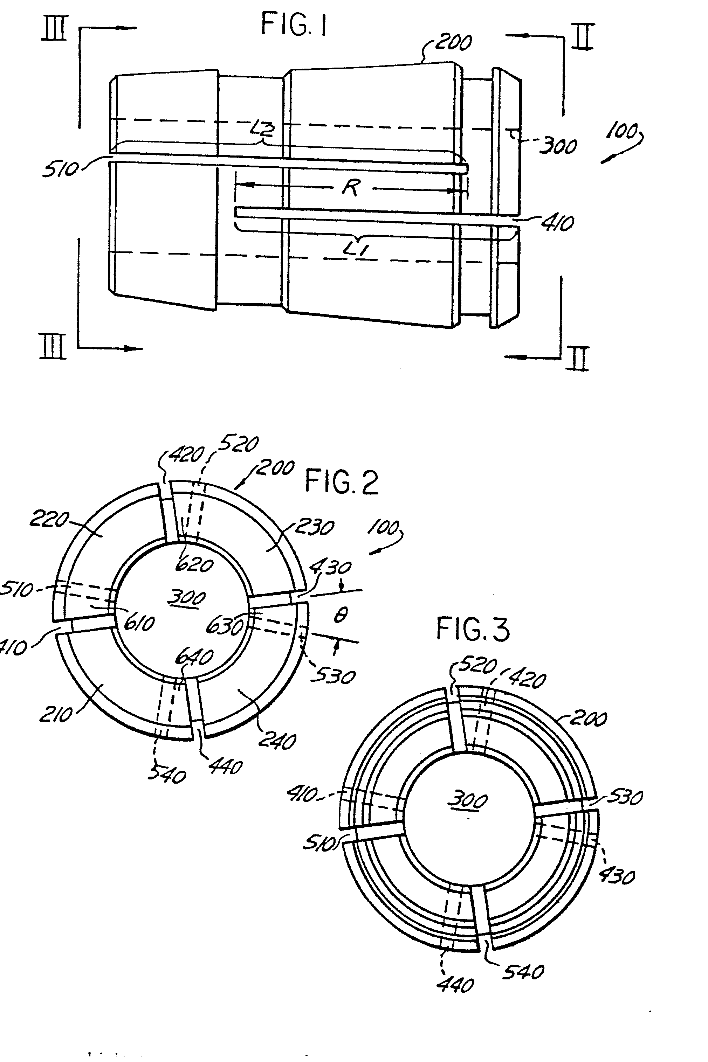

Figure 1 is a view of a collet 100 of the present invention. The collet includes an outer surface 200 and a tool-receiving bore 300. A first slot 410 extends rearwardly from a forward end of the collet and a secod slot 510 extends forwardly from a rear end of the collet.

The collet body 200 generally tapers rearwardly to a smaller external diameter. As shown in Figure 1, the external surface of the collet body 200 may include annular recesses or grooves which are well known in the art and which are not especially relevant to the present invention.

The slots 410, 510 extend radially toward the axis of the collet and of the tool-receiving bore 300. The slot 410 has an axial length or depth $L_1$ and the slot 510 has an axial length $L_2$. To provide a uniform closing rate between the front end of the collet and the back end of the collet the length $L_1$ is chosen to be less than the length $L_2$. The length $L_1$ when added to the length $L_2$ is greater than the axial length of the collet, creating an overlapping region R which is closely proximate to the

0013645

slots 410, 510.

In the overlapping region, the closely proximate slots define a flex beam which is important to the present invention. As the size, shape and length of the flex beam are varied, the spring characteristics or flexibility of the collet are affected.

Figure 2 shows a front end view of the collet 100 of the present invention, including the outer surface 200 of the collet and the tool-receiving bore 300. The first set of slots 410, 420, 430, 440 are shown with solid lines as they extend rearwardly from the forward end of the collet. The second set of slots 510, 520, 530, 540 are shown in dotted lines as they extend forwardly from the rear of the collet and terminate within the collet body. As shown in this drawing, the slots are all radial in that they are aligned to pass through the center of the collet and its tool-receiving bore 300 (the axis of the collet). The slots 410, 430 are diametrically-opposed, as are slots 420, 440. Also, the slots 510, 530 and the slots 520, 540 are diametrically-opposed.

The closely adjacent slots from the two sets (slots 410 and 510) are spaced by an angle θ, which is varied depending upon the dimensions of the collet and its characteristics as desired, however, it is generally in the range of 10°-20° and is always chosen to be less than half of the angular displacement between two adjacent spots in a single set. Thus, the second set of slots is not chosen to bisect the first set of slots but rather to create a flex beam there between. Flex beams 610, 620, 630, 640 are shown in Figure 2 as the thin pie or wedge-shaped sections between adjacent slots.

The larger wall sections between pairs of slots are shown as 210, 220, 230, 240. The inward force on two opposite sections (e.g. 210 and 230) creates an inward or closing effect on all four sections, which is a desirable effect and appears related to the type of slotting arrangement which is used.

The present collet had radial symmetry prior to the slotting throughout the entire length and the slotting was accomplished without the necessity of providing thin-walled portions in the region of the slot. Material was removed only from the slots themselves from the radially-symmetric collet blank.

Figure 3 shows the rear end view of the collet of Figure 1. Other than the change in the dotted and solid representations of the individual slots and the change in the circular representations of the collet external structure, this view is essentially similar to Figure 2.

The external surface 200 and the tool-receiving bore 300 are shown, along with the slots 510, 520, 530, 540 shown in solid lines. The slots 410, 420, 430, 440 extending from the forward surface and terminating prior to the rear surface, are shown with dotted lines.

This design is rather simple for the manufacturing of the collet and has a rather low manufacturing cost. Slots 510 and 530 could be made with a single pass of the abrasive wheel, then the collet (or abrasive) indexed 90° and a second pass made with the abrasive wheel, again to the desired depth. The collet is then turned end for end, indexed by the angle θ, and the two passes with abrasive wheel are repeated with a different (lesser) depth, with the two passes on this end separated by a 90° indexing.

The foregoing description of the preferred embodiment is merely exemplary of the present invention. The structure shown may be modified in one of several ways known to those skilled in the art, and further, some features of the present invention may be used without the corresponding use of other features. For example, there need not be four slots in each set, as other numbers could be used. The slots could be an odd number in each set which would add to the manufacturing costs but might be desirable in some circumstances.

## C L A I M S

1. A collet for a collet-chuck assembly comprising : an outer body wall extending from a forward end to a rear end, an internal tool receiving bore, a first set of slots extending rearwardly from the forward end and extending radially from the wall to the internal bore, said slots being arranged in diametrically opposed pairs, characterized by a second set of slots extending forwardly from the rear end, said slots extending radially from the wall to the internal bore and being spaced from the nearest adjacent slot in said first set by a small angular displacement.

2. A collet according to Claim 1, characterized in that the slots in the second set are longer than the slots in the first set.

3. A collet according to Claim 1, characterized in that adjacent slots define a flex beam having a thickness between the slots which is less than the thickness of the collet wall, whereby the collet retains strength through the thickness of the collet wall and flexibility from the rather thin flex beam.

FIG.1

FIG.2

FIG.3

**European Patent Office**

## EUROPEAN SEARCH REPORT

| DOCUMENTS CONSIDERED TO·BE RELEVANT | | | CLASSIFICATION OF THE APPLICATION (Int. Cl.) |
|---|---|---|---|
| Category | Citation of document with indication, where appropriate, of relevant passages | Relevant to claim | B 23 B 31/20 |
| X | US – A – 2 978 250 (I.V. ABADJIEFF) <br> * claim 3; column 2, lines 2 to 5; column 4, lines 15 to 22; fig. 9 to 11 * | 1-3 | |
| | US – A – 3 819 195 (J.W. LEHDE, JR. et al.) <br> * claim 1 * | 1,2 | |
| | | | TECHNICAL FIELDS SEARCHED (Int.Cl.) |
| | US – A – 2 383 036 (M.L. BENJAMIN et al.) <br> * page 1, right column, lines 40 to 46 * | 1 | B 23 B 31/00 |
| D | US – A – 2 996 301 (J.R. COX) | 1 | |
| D | US – A – 3 311 383 (J.R. COX) | 1 | |
| D | US – A – 2 500 491 (A.T. HAMPTON) | 1 | |
| D | US – A – 2 562 455 (G.O. GRIDLEY) | 1 | CATEGORY OF CITED DOCUMENTS |
| D | US – A – 2 465 837 (M.L. BENJAMIN et al.) | 1 | X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | The present search report has been drawn up for all claims | | &: member of the same patent family, corresponding document |
| Place of search <br> Berlin | Date of completion of the search <br> 18-04-1980 | Examiner <br> MARTIN | |

EPO Form 1503.1  06.78